# EUROPÄISCHE PATENTSCHRIFT

(11) **EP 3 372 139 B1**
(45) Veröffentlichungstag und Bekanntmachung des Hinweises auf die Patenterteilung: **08.06.2022**
(21) Anmeldenummer: 18159959.8
(22) Anmeldetag: 05.03.2018
(51) Int. Cl.: A47L 15/42, D06F 39/00

(54) **REINIGUNGSMASCHINE, INSBESONDERE HAUSHALTSGESCHIRRSPÜLMASCHINE**
CLEANING MACHINE, IN PARTICULAR DOMESTIC DISHWASHER
MACHINE À NETTOYER, EN PARTICULIER LAVE-VAISSELLE ÉLECTROMÉNAGER

(30) Priorität: 08.03.2017 DE 102017104915
(43) Veröffentlichungstag der Anmeldung: 12.09.2018
(73) Patentinhaber: Miele & Cie. KG, 33332 Gütersloh (DE)
(72) Erfinder: Steinmeier, Ralph, 32052 Herford (DE); Bertram, Andre, 33609 Bielefeld (DE); Dahms, Tobias, 30519 Hannover (DE); Wolf, Cornelius, 33739 Bielefeld (DE); Nierling, Andreas, 49326 Melle (DE); Gießel, Michael, 33699 Bielefeld (DE)

(56) Entgegenhaltungen:
- EP-A1- 2 309 052
- EP-A2- 2 322 072
- WO-A1-2014/198300
- CH-A2- 699 692
- CN-A- 106 455 901
- US-A1- 2012 047 961

## Beschreibung

Die Erfindung betrifft eine Reinigungsmaschine, insbesondere eine Haushaltsgeschirrspülmaschine, mit einem einen Behandlungsraum bereitstellenden Behandlungsbehälter, der der Aufnahme von zu reinigendem Behandlungsgut dient, und einer Wärmepumpeneinrichtung, die einen Verdampfer aufweist, der innerhalb eines mit einem Wärmeträgermedium befüllten Tanks angeordnet ist. Ferner betrifft die Erfindung ein Verfahren zum Betrieb einer Reinigungs-, insbesondere Geschirrspülmaschine. Reinigungsmaschine, insbesondere Geschirrspülmaschinen der eingangs genannten Art sind aus dem Stand der Technik an sich wohl bekannt. Eines gesonderten druckschriftlichen Nachweises bedarf es an dieser Stelle deshalb nicht.

Vorbekannte Geschirrspülmaschinen verfügen über einen Spülbehälter, auch Bottich genannt, der einen Spülraum bereitstellt. Dieser ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich beispielsweise um Geschirr, Besteckteile und/oder dergleichen handeln kann.

Zur Beaufschlagung von zu reinigendem Spülgut mit Spülflüssigkeit, der sog. Spülflotte, verfügt die Geschirrspülmaschine im Innenraum des Spülbehälters über eine Sprüheinrichtung. Diese Sprüheinrichtung stellt typischerweise verdrehbar gelagerte Sprüharme zur Verfügung, wobei in der Regel zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Die von der Sprüheinrichtung im Betriebsfall abgegebene Spülflotte trifft auf das zu reinigende Spülgut und sammelt sich alsdann in einem Sammeltopf des Spülbehälters an. Der Sammeltopf ist an eine Umwälzpumpe einerseits und an eine Ablaufpumpe andererseits angeschlossen. Zur Beaufschlagung der Sprüheinrichtung mit Spülflotte dient die Umwälzpumpe, die im bestimmungsgemäßen Verwendungsfall die in die Geschirrspülmaschine eingeförderte Spülflüssigkeit umwälzt. Mit Abschluss eines Spülprogramms wird die Spülflotte mittels der Ablaufpumpe verworfen und abgepumpt.

Geschirrspülmaschinen der eingangs genannten Art können bekanntermaßen mit einer Wärmepumpeneinrichtung ausgestattet sein, um den Energieverbrauch insbesondere bei einem Aufheizen der Spülflotte zu reduzieren, insbesondere deshalb, weil ein solches Aufheizen der Spülflotte den größten Teil am Energieverbrauch einer Geschirrspülmaschine ausmacht.

Aus der EP 2 682 038 A2 ist eine Geschirrspülmaschine mit einer Luft-Wasser-Wärmepumpeneinrichtung bekannt. Im Betriebsfall entzieht die Wärmepumpeneinrichtung der Umgebungsatmosphäre, das heißt der die Geschirrspülmaschine umgebenden Luft Wärmeenergie, um diese auf die im Inneren der Geschirrspülmaschine umgewälzte Spülflotte zu übertragen. Die Wärmepumpeneinrichtung verfügt zu diesem Zweck in an sich bekannter Weise über einen Verdampfer, einen Verdichter, einen Verflüssiger, ein Entspannungsorgan und einen diese Komponenten miteinander strömungstechnisch verbindenden Strömungs- oder Umwälzkreislauf. Dabei dient der Verflüssiger als Wärmetauscher, mittels dem Wärmeenergie von einem im Strömungskreislauf der Wärmepumpeneinrichtung umgewälzten Arbeitsmedium auf die Spülflotte übertragen wird.

Im bestimmungsgemäßen Verwendungsfall der Wärmepumpeneinrichtung wird zwecks Aufheizung der Spülflotte mittels Ventilatoren Raumluft angesaugt und über den Verdampfer der Wärmepumpeneinrichtung geleitet. Dies führt zu einer Abkühlung der zugeführten Raumluft, wobei die der Raumluft entzogene Wärmeenergie auf das Arbeitsmedium übertragen wird, das infolge dessen im Verdampfer verdampft. Das daraufhin in gasförmiger Form vorliegende Arbeitsmedium wird anschließend in dem Verdichter komprimiert und so auf ein höheres Temperaturniveau gebracht. Schließlich erfolgt eine Einleitung des gasförmigen Arbeitsmediums in den Verflüssiger, wo unter Energiefreigabe eine Verflüssigung des Arbeitsmediums stattfindet. Die dabei frei werdende Wärmeenergie dient der Spülflottenaufheizung. Anschließend gelangt das Arbeitsmedium durch das Entspannungs- bzw. Drosselorgan, welches das Arbeitsmedium vom Verflüssigungsdruck auf den Verdampfungsdruck entspannt, erneut zum Verdampfer.

Aus dem Stand der Technik ist gleichfalls der Einsatz von Wasser-Wasser-Wärmepumpeneinrichtungen bekannt, so zum Beispiel aus der EP 2 206 824 A2. Im bestimmungsgemäßen Verwendungsfall wird mit einer solchen Wärmepumpeneinrichtung nicht der Umgebungsatmosphäre, sondern einem Flüssigkeitsreservoir Wärmeenergie entzogen. Die EP 2 206 824 A2 sieht zu diesem Zweck einen geschlossenen Wassertank vor, der den Verdampfer der Wärmepumpeneinrichtung beherbergt. Im Betriebsfall kommt es infolge eines Wärmeenergieentzugs zu einer Abkühlung des im Tank bevorrateten Wassers. Da der Tank geschlossen ausgebildet ist, kann eine Abkühlung des Wassers bis zur Vereisung vorgenommen werden.

Den vorbekannten Konstruktionen ist gemein, dass die zur Aufheizung der Spülflotte mittels der Wärmepumpeneinrichtung übertragene Wärmeenergie schlussendlich der Umgebungsluft entstammt, so auch bei einer Wasser-Wasser-Wärmepumpeneinrichtung, wenn auch indirekt. Denn ein Aufwärmen, ggfs. sogar Auftauen des im geschlossenen Tank der Wasser-Wasser-Wärmepumpeneinrichtung befindlichen Wassers erfolgt durch Wärmeentzug aus der Umgebungsluft. Dies führt in nachteiliger Weise zu einer Abkühlung der Umgebungsluft, was verwenderseitig als nachteilig empfunden wird.

Bei einer Wasser-Wasser-Wärmepumpeneinrichtung kommt in nachteiliger Weise hinzu, dass ein bestimmungsgemäßer Einsatz der Geschirrspülmaschine unter gleichzeitiger Nutzung der Wärmepumpeneinrichtung energetisch nur dann sinnvoll ist, wenn das im Tank bevorratete Wasser eine gewisse Mindesttemperatur aufweist. Sollte dieses nach einer vorangegangenen Geschirrspülmaschinenbenutzung noch zu kühl oder sogar gefroren sein, muss mit einem bestimmungsgemäßen Einsatz der Geschirrspülmaschine bis zum Erreichen der Mindesttemperatur gewartet werden, was bei noch gefrorenem Wasser durchaus 24 Stunden in Anspruch nehmen kann. Eine bestimmungsgemäße Verwendung der Geschirrspülmaschine unter Einsatz der Wärmepumpeneinrichtung ist mithin pro Tag nur einmal möglich. Auch dies wird verwenderseitig als nachteilig empfunden.

Die CH 699692 A2 offenbart eine Geschirrspülmaschine mit einer Wasser-Wasser-Wärmepumpeneinrichtung, bei der die Wärmeenergie zur Aufheizung von Spülflotte wahlweise einem ersten oder einem zweiten mit Wasser gefüllten Tank entnommen werden kann. Außerdem kann mittels der Wärmepumpeneinrichtung auch Wärme vom ersten in den zweiten Tank transferiert werden.

Die US 2012/0047961 A1 offenbart eine Geschirrspülmaschine mit einem Koaxialwärmetauscher, mittels dem Wärmeenergie vom Abwasser, welches aus der Geschirrspülmaschine abgeführt wird, auf das einlaufende Frischwasser transferiert wird.

Ausgehend vom Vorbeschriebenen ist es die **Aufgabe** der Erfindung, eine Reinigungsmaschine der eingangs genannten Art vorzuschlagen, die einen Betrieb der Wärmepumpeneinrichtung unter vermindertem Energieentzug aus der Umgebungsluft gestattet.

Zur **Lösung** dieser Aufgabe wird mit der Erfindung eine Reinigungsmaschine mit den Merkmalen von Anspruch 1 vorgeschlagen.

Bei der erfindungsgemäßen Reinigungsmaschine kann es sich beispielsweise um eine Waschmaschine für Textilgut handeln oder um eine Spülmaschine, insbesondere um eine Geschirrspülmaschine. Im Folgenden wird die Erfindung für eine Geschirrspülmaschine beschrieben, die Erfindung kann jedoch in gleicher Weise allgemein für eine Reinigungsmaschine eingesetzt werden, wobei der Begriff Spülbehälter durch Reinigungsbehälter zu ersetzen ist, ebenso Spülraum durch Behandlungsraum, Spülflotte durch Behandlungsflotte, Spülschritt durch Behandlungsschritt sowie Spülprogramm durch Behandlungsprogramm.

Die Geschirrspülmaschine nach der Erfindung verfügt über eine
Wärmepumpeneinrichtung, die einen Wärmetauscher aufweist. Dieser Wärmetauscher ist zur Hindurchführung zweier Tauschermedien ausgerüstet, wobei im Betriebsfall Wärmeenergie von dem einen Tauschermedium auf das andere Tauschermedium übertragen wird. Erfindungsgemäß ist nun vorgesehen, dass der Wärmetauscher eingangsseitig des ersten Tauschermediums an den Spülbehälter angeschlossen ist. Als erstes Tauschermedium dient mithin Spülflotte. Eingangsseitig des zweiten Tauschermediums ist der Wärmetauscher an den Tank der Wärmepumpeneinrichtung angeschlossen, der den Verdampfer beherbergt. Der Tank ist mit einem Wärmeträgermedium befüllt, bei dem es sich bevorzugter Weise um Wasser handelt. Das Wärmeträgermedium dient als zweites Tauschermedium für den Wärmetauscher.

Der erfindungsgemäß vorgesehene Wärmetauscher ermöglicht eine Wärmeenergieübertragung von der Spülflotte auf das im Tank der Wärmepumpeneinrichtung befindliche Wärmeträgermedium. Im Betriebsfall kann also mittels des erfindungsgemäß vorgesehenen Wärmetauschers Wärmeenergie aus der Spülflotte entzogen und auf das Wärmeträgermedium übertragen werden.

Zusätzlich zu dem erfindungsgemäßen Wärmetauscher weist die Wärmepumpeneinrichtung insbesondere einen als Verdampfer ausgebildeten Wärmetauscher auf, mit dem Wärmeenergie vom Wärmeträgermedium auf das im Strömungskreislauf der Wärmepumpeneinrichtung zirkulierende Arbeitsmedium übertragen wird, und einen als Verflüssiger ausgebildeten Wärmetauscher, mit dem Wärmeenergie vom Arbeitsmedium auf die Spülflotte übertragen wird.

Die vorbeschriebene Konstruktion erweist sich insbesondere insofern als vorteilhaft, als dass nach einer Beendigung eines mit erwärmter Spülflotte durchgeführten Spülschritts eines Spülprogramms die in der Spülflotte noch befindliche Restwärmeenergie dazu genutzt werden kann, das Wärmeträgermedium der Wärmepumpeneinrichtung zu erwärmen, so dass ein baldiger Wiedereinsatz der Wärmepumpeneinrichtung gestattet ist. Im Unterschied zum Stand der Technik erfolgt ein Wärmeeintrag in das Wärmeträgermedium mithin nicht nur aus der Raumluft, sondern auch aus der Spülflotte, was die Zeitdauer bis zur Erreichung der für einen ordnungsgemäßen Betrieb der Wärmepumpeneinrichtung notwendigen Mindesttemperatur des Wärmeübertragungsmediums deutlich reduziert.

Die erfindungsgemäße Konstruktion erweist sich auch energetisch als vorteilhaft, da die zwecks Aufheizung der Spülflotte in die Spülflotte eingebrachte Wärmeenergie teilweise zurückgewonnen werden kann und nicht durch Abpumpen der Spülflotte verloren geht. Damit kann ein Teil der zuvor durch die Wärmepumpeneinrichtung in die Spülflotte eingebrachten Wärmeenergie für die Wärmepumpeneinrichtung zwecks Erwärmung des Wärmeträgermediums zurückgewonnen werden.

Im bestimmungsgemäßen Anwendungsfall findet eine Aufheizung der Spülflotte in an sich bekannter Weise unter Mitwirkung der Wärmepumpeneinrichtung statt. Dabei kühlt das im Tank der Wärmepumpeneinrichtung befindliche Wärmeträgermedium ab, friert sogar ein, was bei der Verwendung von Wasser als Wärmeträgermedium regelmäßig der Fall ist. Für einen erneuten Einsatz der Wärmepumpeneinrichtung ist das Wärmeträgermedium auf eine Mindesttemperatur aufzuwärmen, ggfs. sogar aufzutauen. Dies geschieht erfindungsgemäß mit Hilfe eines Wärmetauschers, der es ermöglicht, in der Spülflotte noch befindliche Restwärmeenergie auf das Wärmeträgermedium zu übertragen. Zu diesem Zweck ist der Wärmetauscher eingangsseitig des ersten Tauschermediums, nämlich der Spülflotte an den Spülbehälter strömungstechnisch angeschlossen. Eingangsseitig des zweiten Tauschermediums, nämlich des Wärmeträgermediums ist der Wärmetauscher an den Tank strömungstechnisch angeschlossen. Im bestimmungsgemäßen Verwendungsfall können mithin die Tauschermedien im Wärmetauscher aneinander vorbeigeführt werden, infolgedessen es zu einem Wärmeübergang von der als erstes Tauschermedium dienenden Spülflotte auf das als zweites Tauschermedium dienende Wärmeträgermedium kommen kann.

Der Wärmetauscher kann beispielsweise als Plattenwärmetauscher ausgebildet sein. Gemäß einem besonders vorgezogenen Ausführungsbeispiel der Erfindung ist der Wärmetauscher jedoch ein Koaxial-Wärmetauscher. Von Vorteil eines Koaxial-Wärmetauschers ist im Besonderen, dass sich dieser platzsparend innerhalb des vom Gehäuse der Geschirrspülmaschine bereitgestellten Volumenraums unterbringen lässt. Darüber hinaus kann ein besonders effektiver Wärmeübertrag zwischen den Tauschermedien erreicht werden.

Es ist gemäß einem weiteren Merkmal der Erfindung vorgesehen, dass der Koaxial-Wärmetauscher ein einen ersten Strömungskanal bereitstellendes Innenrohr und ein das Innenrohr unter Belassung eines als zweiten Strömungskanal dienenden Ringspalts aufnehmendes Außenrohr aufweist. Dabei ist das Innenrohr an den Spülbehälter strömungstechnisch angeschlossen. Der Koaxial-Wärmetauscher stellt mithin zwei Strömungskanäle bereit, einen ersten Strömungskanal für das erste Tauschermedium und einen zweiten Strömungskanal für das zweite Tauschermedium. Dabei ist der erste Strömungskanal von einem ersten Rohr bereitgestellt, dem sog. Innenrohr. Dieses Innenrohr ist im endmontierten Zustand von einem Außenrohr umgeben, und zwar unter Belassung eines Ringspalts. Dieser Ringspalt dient als zweiter Strömungskanal für das zweite Tauschermedium.

Es ist bevorzugt, dass das Innenrohr an den Spülbehälter strömungstechnisch angeschlossen ist. Damit dient der im Innenrohr bereitgestellte erste Strömungskanal dem Durchfluss von aus dem Spülbehälter stammender Spülflotte. Der durch den Ringspalt gebildete zweite Strömungskanal dient indes der Durchleitung des aus dem Tank der Wärmepumpeneinrichtung stammenden Wärmeträgermediums.

Die Nutzung des Innenrohrs als Strömungskanal für die Spülflotte ist deshalb bevorzugt, weil die Spülflotte unter Umständen auch grobe Partikel an Verunreinigungen und/oder Verschmutzungen mit sich führen kann. Da der als zweiter Strömungskanal dienende Ringspalt eine größere Verstopfungsneigung als der vom Innenrohr bereitgestellte erste Strömungskanal aufweist, ist es bevorzugt, die Spülflotte in den ersten Strömungskanal einzuleiten.

Gemäß einem weiteren Merkmal der Erfindung ist vorgesehen, dass die Eingangsanschlüsse des Koaxial-Wärmetauschers zur Zuführung der Tauschermedien strömungstechnisch einander gegenüberliegend ausgebildet sind. Damit wird im bestimmungsgemäßen Betrieb ein Wärmeaustausch im Gegenstrom erreicht, der effektiver ist als ein Wärmeaustausch im Gleichstrom.

Gemäß einem weiteren Merkmal der Erfindung sind eine im Spülbehälter angeordnete Sprüheinrichtung zur Beaufschlagung von zu reinigendem Spülgut mit Spülflotte und eine der Umwälzung der Spülflotte dienende Umwälzpumpe vorgesehen, wobei der Wärmetauscher eingangsseitig des ersten Tauschermediums an die Umwälzpumpe oder eine der Umwälzpumpe nachgeschaltete Wasserweiche angeschlossen ist. Der Wärmetauscher ist mithin unter Zwischenschaltung der Umwälzpumpe an den Spülbehälter angeschlossen, so dass die im Spülbetrieb zur Umwälzung der Spülflotte und Beschickung der Sprüheinrichtungen mit Spülflotte dienende Umwälzpumpe zusätzlich auch als Förderpumpe für den Wärmetauscher genutzt werden kann. Der Einsatz einer zusätzlichen Pumpe ist damit nicht erforderlich.

Gemäß einem weiteren Merkmal der Erfindung ist vorgesehen, dass der Wärmetauscher ausgangsseitig des ersten Tauschermediums an den Spülbehälter strömungstechnisch angeschlossen ist. Dabei kann der Wärmetauscher direkt in den Spülbehälter oder den Sammeltopf münden oder in eine in den Spülbehälter mündende Komponente. Es ist mithin ein erster Strömungskreislauf gegeben, der als offener Strömungskreislauf ausgebildet ist und den Wärmetauscher mit dem Spülbehälter verbindet. In diesem Strömungskreislauf wird vorzugsweise mittels der Umwälzpumpe Spülflotte umgewälzt, die dem Spülbehälter entnommen, durch den Wärmetauscher geführt und alsdann wieder in den Spülbehälter abgegeben wird. Im Betriebsfall wird über diesen Strömungskreislauf Spülflotte durch den Wärmetauscher geführt. Die Umwälzpumpe kann insbesondere eine daran angeschlossene oder integrierte Wasserweiche aufweisen, die es gestattet einzelne Sprüharme oder auch alle sowie den den Wärmetauscher umfassenden ersten Strömungskreislauf strömungstechnisch wahlweise ein- oder abzuschalten. Wenn die Umwälzpumpe keine integrierte Wasserweiche aufweist, kann letztere auch strömungstechnisch hinter der Umwälzpumpe als zusätzliche Komponente vorgesehen werden.

Gemäß einem weiteren Merkmal der Erfindung ist vorgesehen, dass während des Betriebs der Umwälzpumpe im Spülbetrieb der erste Strömungskreislauf durch den Wärmetauscher mit dem ersten Tauschermedium nicht durchströmt ist, insbesondere auch nicht durch einen geringfügigen Leckagevolumenstrom (von typischerweise 0,01 - 1,0L/min), welcher bei herkömmlichen Wasserweichen konstruktionsbedingt aufgrund der ansonsten wirkenden hohen Verstellkräfte grundsätzlich nicht vermeidbar ist. Um selbst diesen geringfügigen Leckagevolumenstrom der Spülflotte durch den Wärmetauscher sicher zu vermeiden, kann zwischen der Wasserweiche und dem Wärmetauscher ein zusätzliches Ventil angeordnet werden

In einer weiteren Ausführung kann die Förderung der Spülflotte durch den Wärmetauscher statt über die im Spülbetrieb zur Umwälzung der Spülflotte und Beschickung der Sprüheinrichtungen mit Spülflotte dienende Umwälzpumpe auch über eine separate Förderpumpe erfolgen. Vorteil dieser Ausführung ist es, dass ein Leckagevolumenstrom durch den Wärmetauscher während des Spülbetriebes sicher vermieden werden kann. Umgekehrt kann auch bei Betrieb der separaten Förderpumpe zur Förderung der Spülflotte durch den Wärmetauscher ein unerwünschter, unkontrollierter Leckagevolumenstrom durch die Sprüharme über das Spülgut ausgeschlossen werden.

Die Umwälzpumpe und/oder die optionale zusätzliche Förderpumpe sind in ihrer Drehzahl regelbar, insbesondere unabhängig voneinander drehzahlregelbar. Ist lediglich eine Umwälzpumpe vorhanden, die sowohl zur Umwälzung der Spülflotte und Beschickung der Sprüheinrichtungen einerseits als auch zur Förderung der Spülflotte durch den Wärmetauscher andererseits dient, so erfolgt dies mit einer unterschiedlich hohen Drehzahl. Dabei ist die Drehzahl der Umwälzpumpe während der Umwälzung der Spülflotte und Beschickung der Sprüheinrichtungen höher, insbesondere wesentlich höher als bei der Förderung der Spülflotte durch den Wärmetauscher.

Gemäß einem weiteren Ausführungsbeispiel der Erfindung ist vorgesehen, dass der Wärmetauscher ausgangsseitig des ersten Tauschermedium an den Spülbehälter unter Zwischenordnung des Verflüssigers der Wärmepumpeneinrichtung, mit dem Wärmeenergie vom Arbeitsmedium auf die Spülflotte übertragen wird, strömungstechnisch angeschlossen ist. Der Wärmetauscher ist somit ausgangsseitig nicht direkt an den Spülbehälter strömungstechnisch angeschlossen, stattdessen ist ein Strömungskreislauf gebildet, in dem mittels der Umwälzpumpe oder einer zusätzlichen Förderpumpe Spülflotte umgewälzt wird, die dem Spülbehälter entnommen, durch den Wärmetauscher geführt, anschließend durch den Verflüssiger geführt und alsdann wieder in den Spülbehälter abgegeben wird. Der erfindungsgemäße Wärmetauscher und der Verflüssiger der Wärmepumpeneinrichtung sind somit in einem gemeinsamen Strömungskreislauf integriert und darin in Reihe angeordnet. Somit muss für den Wärmetauscher und den Verflüssiger an der Umwälz- oder Förderpumpe bzw. an einer daran angeschlossenen oder integrierten Wasserweiche lediglich ein gemeinsamer Anschluss und im Spülbehälter lediglich ein gemeinsamer Auslass vorgesehen werden, was konstruktiv einen erheblichen Vorteil darstellt.

Gemäß einem weiteren Merkmal der Erfindung ist vorgesehen, dass der Wärmetauscher ausgangsseitig des zweiten Tauschermediums an den Tank der Wärmepumpeneinrichtung strömungstechnisch angeschlossen ist. Es ist mithin ein zweiter Strömungskreislauf vorgesehen, der den Wärmetauscher mit dem Tank der Wärmepumpeneinrichtung strömungstechnisch verbindet. Dieser Strömungskreislauf ist als geschlossener Kreislauf ausgeführt und dient der Umwälzung des vom Tank bevorrateten Wärmeträgermediums, bei dem es sich bevorzugter Weise um Wasser handelt. Im Betriebsfall wird das Wärmeträgermedium gemäß zweitem Strömungskreislauf umgewälzt, das heißt vom Tank zum Wärmetauscher und von dort zurück zum Tank geführt. Zwecks Umwälzung ist eine entsprechende Pumpe, die auch als Wärmeträgermediumpumpe bezeichnet werden kann, in den zweiten Strömungskreislauf integriert.

Gemäß einem weiteren Merkmal der Erfindung ist der Wärmetauscher so angeordnet und ausgebildet, dass das Wärmeträgermedium bei Ausschalten der Wärmeträgermediumpumpe schwerkraftbedingt aus dem Wärmetauscher abfließt. Bei ausgeschalteter Wärmeträgermediumpumpe erfolgt somit im Wärmetauscher keine Wärmeübertragung von der Spülflotte auf das Wärmeträgermedium, stattdessen wird die durch den Wärmetauscher geführte Spülflotte gegenüber der Umgebung besser isoliert, insbesondere wenn der Wärmetauscher als Koaxialwärmetauscher ausgebildet, bei dem das Innenrohr den Strömungskanal für die Spülflotte und das Außenrohr den Strömungskanal für das Wärmeträgermedium bereitstellt.

Gemäß einem weiteren Merkmal der Erfinder weist die Wärmepumpeneinrichtung zusätzlich zu dem Wärmetauscher, der eingangsseitig des ersten Tauschermediums an den Behandlungsbehälter und eingangsseitig des zweiten Tauschermediums an den Tank strömungstechnisch angeschlossen ist, einen Zwischenspeicher zur Bevorratung von Wärmeträgermedium auf. Der Zwischenspeicher ist dem Behandlungsbehälter nebengeordnet, vorzugsweise benachbart zu einer in Beschickungsrichtung der Reinigungsmaschine seitlichen Behandlungsbehälterwand. Der Zwischenspeicher steht in strömungstechnischer Verbindung mit dem Tank, so dass Wärmeträgermedium aus dem Tank in den Zwischenspeicher überführt werden kann und umgekehrt. Der Zwischenspeicher ist außenseitig am Reinigungsbehälter angeordnet. Um einen möglichst guten Wärmeübertrag vom Reinigungsbehälter, dessen Beladung und/oder aus der Reinigungsflotte auf das im Zwischenspeicher befindliche Wärmeträgermedium zu ermöglichen, sind der Reinigungsbehälter und der Zwischenspeicher vorzugsweise thermisch miteinander gekoppelt. Dies kann in einfachster Weise beispielsweise dadurch erreicht werden, dass der Reinigungsbehälter ohne Ausbildung einer thermischen Trennung direkt außenseitig an der Außenwand des Reinigungsbehälters angeordnet ist, so dass ein möglichst großflächiger Kontaktbereich zwischen Reinigungsbehälterwand und daran anliegender Zwischenspeicherwand erreicht ist. Bevorzugt ist in diesem Zusammenhang ferner, den Zwischenspeicher aus einem dünnwandigen Kunststoffmaterial zu bilden, was ebenfalls förderlich für den gewünschten Wärmeübergang ist. Somit dient der Zwischenspeicher zum einen dazu, während der Trocknung innerhalb des Reinigungsbehälters eine kühle Kondensationsfläche bereitzustellen und dadurch die Trocknung zu verbessern und zu beschleunigen. Andererseits dient er dazu, Wärmeenergie aus dem Reinigungsbehälter oder der Umgebung auf das Wärmeträgermedium zu übertragen.

Wenn als Wärmeträgermedium Wasser vorgesehen ist, kann es sich bei dem Zwischenspeicher um einen Frischwassertank, eine Wassertasche oder dgl. Behältnis handeln, das ohnehin schon als Baukomponente der Reinigungs-, insbesondere Geschirrspülmaschine vorhanden ist. So sind beispielsweise aus dem Stand der Technik sogenannte Wassertaschen bekannt, die am Ende eines Spülprogramms mit Frischwasser aufgefüllt werden und dann zu Beginn eines nachfolgenden Spülprogramms auf Raumtemperatur erwärmtes Frischwasser beherbergen, das in den Spülraum der Geschirrspülmaschine eingelassen wird. Diese ohnehin schon vorhandene Wassertasche kann beispielsweise als Wasserbehälter im Sinne dieser Ausgestaltung der Erfindung genutzt werden.

Vorzugsweise ist eine Ventileinrichtung vorhanden, die derart schaltbar ist, dass das Wärmeträgermedium aus dem Tank mittels der Wärmeträgermediumpumpe wahlweise entweder zum Wärmetauscher oder zum Zwischenspeicher gefördert werden kann.

Der von der Wärmepumpeneinrichtung bereitgestellte Tank kann in Abkehr zur EP 2 206 824 A2 auch als offener Tank ausgebildet werden, in welchem Fall es sich bei dem zweiten Strömungskreislauf ebenfalls um einen offenen Strömungskreislauf handelt.

Gemäß einem weiteren Merkmal der Erfindung ist vorgesehen, dass der Tank eine Verteileinrichtung für aus dem Wärmetauscher in den Tank einströmendes Wärmeträgermedium aufweist.

Die Verteileinrichtung dient dazu, das in den Tank zurückgeführte Wärmeträgermedium möglichst großflächig innerhalb des Tanks zu verteilen, so dass örtliche Temperaturunterschiede nach Möglichkeit vermieden und gleichmäßiges Erwärmen des Wärmeträgermediums erreicht werden kann. Von besonderem Vorteil ist eine solche Verteileinrichtung insbesondere dann, wenn das Wärmeträgermedium gefroren ist und der Wärmeaustausch mit der Spülflotte insbesondere dazu dient, ein Auftauen des Wärmeträgermediums in möglichst kurzer Zeit zu bewirken. In diesem Fall sorgt nämlich die Verteileinrichtung dafür, dass das in den Tank eingeförderte Wärmeträgermedium großflächig über das im Tank befindliche Eis strömen kann, so dass dieses weitflächig erwärmt und aufgetaut wird.

Gemäß einem weiteren Merkmal der Erfindung ist vorgesehen, dass der tankseitige Tankeinlauf und der tankseitige Tankauslass für das Wärmeträgermedium zwecks strömungstechnischer Entkopplung räumlich weitestgehend voneinander separiert ausgebildet sind. Hierdurch wird eine möglichst gleichmäßige Durchmischung des im Tank bevorrateten Wärmeträgermediums erreicht, mithin insbesondere vermieden, dass zuvor mittels des Wärmetauschers aufgewärmtes Wärmeträgermedium nach einem Einlauf in den Tank über den tankseitigen Auslass unmittelbar wieder abgeführt wird.

Mit der Erfindung wird des Weiteren vorgeschlagen ein Verfahren zum Betrieb einer Geschirrspülmaschine der vorbeschriebenen Art, bei dem nach Beendigung eines mit einer erwärmten Spülflotte durchgeführten Spülschritts eines Spülprogramms die Spülflotte als Wärmequelle verwendet wird und als erstes Tauschermedium durch den Wärmetauscher geführt wird und bei dem das infolge eines vorangegangenen Betriebs der Wärmepumpeneinrichtung abgekühlte Wärmeträgermedium als zweites Tauschermedium durch den Wärmetauscher geführt wird.

Verfahrensseitig ist mithin vorgesehen, dass die nach Beendigung eines Spülschritts noch warme Spülflotte dazu genutzt wird, das in einem vorangegangenen Spülschritt durch einen Betrieb der Wärmepumpeneinrichtung abgekühlte Wärmeträgermedium aufzuheizen. Damit wird ein Teil der zuvor zur Aufheizung der Spülflotte eingesetzten Wärmeenergie zurückgewonnen. Verfahrensseitig wird zu diesem Zweck vorgeschlagen, dass die Spülflotte einerseits als erstes Tauschermedium sowie das Wärmeträgermedium andererseits als zweites Tauschermedium durch den Wärmetauscher geführt werden. Infolge dessen kommt es zu einem Wärmeübertrag von der noch restwarmen Spülflotte auf das kühlere Wärmeträgermedium. Es ergeben sich damit die schon vorstehend erläuterten Vorteile.

Verfahrensseitig ist es des Weiteren vorgesehen, dass die Tauschermedien im Gegenstrom durch den Wärmetauscher geführt werden. Dies bedingt einen besonders effektiven Wärmeübertrag.

Verfahrensseitig ist es des Weiteren vorgesehen, dass die Tauschermedien jeweils in einem Strömungskreislauf wiederholt durch den Wärmetauscher geführt werden. Dabei wird die Temperatur der Spülflotte erfasst, vorzugsweise mittels eines ohnehin schon vorgesehenen Temperatursensors, beispielsweise eines im Sammeltopf der Geschirrspülmaschine angeordneten Temperatursensors. Die Beschickung des Wärmetauschers mit Spülflotte wird bevorzugter Weise dann beendet, wenn die Spülflotte eine vorgebbare Abkühltemperatur erreicht hat, die mittels des Temperatursensors erfasst werden kann. Bevorzugter Weise wird die abgekühlte Temperatur der Spülflotte, mit deren Erreichen eine Beschickung des Wärmetauschers beendet wird, so bemessen, dass die am Strömungskreislauf der Spülflotte beteiligen Baukomponenten der Geschirrspülmaschine nicht soweit auskühlen, dass es zur Durchführung eines nachfolgenden Programmschrittes einer verstärkten Aufheizung der Spülflotte bedarf, um diese Baukomponenten mit aufzuheizen. Handelt es sich bei dem zuletzt durchgeführten Spülschritt um den letzten Spülschritt eines Spülprogramms, kann die Abkühltemperatur der Spülflotte auch entsprechend niedrig gewählt werden.

Ist wie oben beschrieben zusätzlich ein Zwischenspeicher für das Wärmeträgermedium vorhanden, kann das Verfahren insbesondere so ausgestaltet sein, dass nach einem Reinigungsprogrammschritt, in dem die Reinigungsflotte aufgewärmt wurde, die warme Reinigungsflotte einerseits als erstes Tauschermedium sowie das Wärmeträgermedium andererseits als zweites Tauschermedium durch den Wärmetauscher geführt werden, vorzugsweise wiederholt durch den Wärmetauscher geführt werden. Dies erfolgt bei einem Spülprogramm beispielsweise nach einem Programmschritt REINIGEN und/oder nach einem Programmschritt KLARSPÜLEN. Dabei ist insbesondere eine Ventileinrichtung so geschaltet, dass das Wärmeträgermedium aus dem Tank mittels der Wärmeträgermediumpumpe zum Wärmetauscher gefördert wird. Vorzugsweise wird das Wärmeträgermedium dabei gemäß dem oben beschriebenen zweiten Strömungskreislauf umgewälzt, das heißt vom Tank zum Wärmetauscher und von dort zurück zum Tank geführt. Nach dem letzten wasserführenden Programmschritt wird die Ventileinrichtung dann umgeschaltet, nämlich so geschaltet, dass das Wärmeträgermedium aus dem Tank mittels der Wärmeträgermediumpumpe zum Zwischenspeicher gefördert wird. Im Zwischenspeicher wird das Wärmeträgermedium während des Programmschritts TROCKNEN und/oder nach einem Reinigungsprogramm bzw. außerhalb eines Reinigungsprogramms bevorratet, wobei es Wärme aus dem Reinigungsbehälter und der Umgebung aufnimmt. Die Bevorratungsdauer ist dabei vorgegeben oder vorgebbar oder wird abhängig von erfassten Messwerten, insbesondere der Temperatur des Wärmeträgermediums im Tank und/oder im Zwischenspeicher, automatisch festgelegt. Während der Bevorratungsdauer wird im Zwischenspeicher befindliches Wärmeträgermedium vorzugsweise mehrfach in den Tank abgelassen, was vorzugsweise schwerkraftbedingt erfolgt, und anschließend Wärmeträgermedium aus dem Tank mittels der Wärmeträgermediumpumpe zurück in den Zwischenspeicher gefördert. Auf diese Weise wird Wärme aus dem Reinigungsbehälter und der Umgebung in den Tank transferiert, so dass die Temperatur im Tank möglichst schnell wieder hoch genug ist, dass die Wärmepumpe effizient betrieben werden kann.

Mit der Erfindung wird insgesamt eine Geschirrspülmaschine bzw. ein Verfahren zum Betrieb einer solchen Geschirrspülmaschine vorgeschlagen, die bzw. das eine Wiedereinsatzbereitschaft der Wärmepumpeneinrichtung schneller ermöglicht, als dies aus dem Stand der Technik vorbekannt ist. Denn der erfindungsgemäß vorgesehene Wärmetauscher sorgt dafür, dass das im Tank der Wärmepumpeneinrichtung bevorratete Wärmeträgermedium schneller auf die Mindestbetriebstemperatur gebracht werden kann, als dies mit einem Wärmeeintrag allein aus der Umgebungstemperatur gemäß dem Stand der Technik möglich ist.

Weitere Merkmale und Vorteile der Erfindung ergeben sich aus der nachfolgenden Beschreibung anhand der Figuren. Dabei zeigen
- Fig. 1a: in schematischer Darstellung eine erfindungsgemäße Geschirrspülmaschine;
- Fig. 1b: in schematischer Darstellung eine erfindungsgemäße Geschirrspülmaschine gemäß einer alternativen Ausführungsform;
- Fig. 1c: in schematischer Darstellung eine erfindungsgemäße Geschirrspülmaschine gemäß einer weiteren Ausführungsform;
- Fig. 2: in schematischer Ansicht einen Wärmetauscher nach der Erfindung;
- Fig. 3: in schematischer Darstellung eine Verteileinrichtung gemäß einer ersten Ausführungsform;
- Fig. 4: in schematischer Darstellung eine Verteileinrichtung gemäß einer zweiten Ausführungsform;
- Fig. 5: in schematischer Draufsicht von oben die Verteileinrichtung nach Fig. 4;
- Fig. 6: in schematischer Darstellung eine Verteileinrichtung gemäß einer dritten Ausführungsform;
- Fig. 7: in schematischer Draufsicht von oben die Verteileinrichtung nach Fig. 6;
- Fig. 8: in schematischer Darstellung den Tank der erfindungsgemäßen Wärmepumpeneinrichtung in einer beispielhaften Ausgestaltung;
- Fig. 9: in schematischer Darstellung den Tank der erfindungsgemäßen Wärmepumpeneinrichtung gemäß einer ersten Ausführungsform;
- Fig. 10: in schematischer Darstellung den Tank der erfindungsgemäßen Wärmepumpeneinrichtung gemäß einer zweiten Ausführungsform;
- Fig. 11: in schematischer Darstellung den Tank der erfindungsgemäßen Wärmepumpeneinrichtung gemäß einer dritten Ausführungsform;
- Fig. 12: in schematischer Darstellung den Tank der erfindungsgemäßen Wärmepumpeneinrichtung gemäß einer vierten Ausführungsform;
- Fig. 13: in schematischer Ansicht den Tank in einer ersten Ausführungsform in einer ersten Betriebsstellung;
- Fig. 14: in schematischer Ansicht den Tank in einer ersten Ausführungsform in einer zweiten Betriebsstellung;
- Fig. 15: in schematischer Darstellung den Tank in einer zweiten Ausführungsform;
- Fig. 16: in schematischer Darstellung den Tank in einer dritten Ausführungsform;
- Fig. 17: in einem Blockdiagramm die erfindungsgemäße Verfahrensdurchführung;
- Fig. 18: in einem ersten Diagramm ein Temperaturverlauf und
- Fig. 19: in einem zweiten Diagramm eine Auftaukurve.

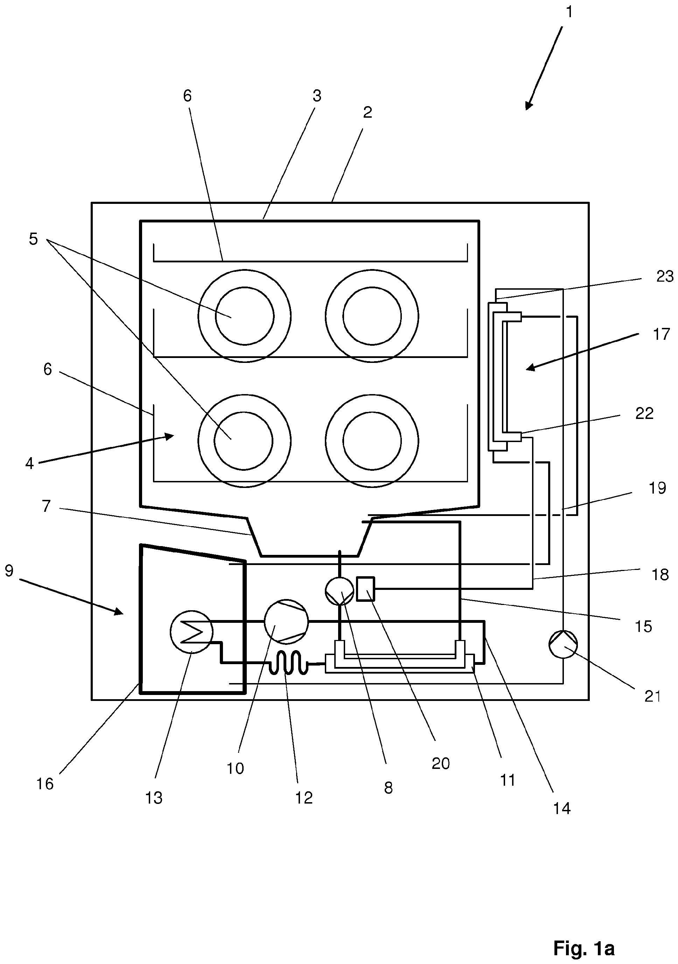

Figur 1a lässt in rein schematischer Darstellung eine Geschirrspülmaschine 1 nach der Erfindung erkennen.

Die Geschirrspülmaschine 1 verfügt über ein Gehäuse 2, das unter anderem einen Spülbehälter 3 aufnimmt. Der Spülbehälter 3 stellt seinerseits einen Spülraum 4 bereit, der im bestimmungsgemäßen Verwendungsfall der Aufnahme von zu reinigendem Spülgut 5 dient.

Zur Beschickung von zu reinigendem Spülgut 5 mit Spülflotte dient eine in den Figuren nicht näher dargestellte Sprüheinrichtung, die innerhalb des Spülbehälters 3 angeordnet ist. Bevorzugter Weise verfügt eine solche Sprüheinrichtung über Sprüharme, die jeweils verdrehbar innerhalb des Spülbehälters 2 angeordnet sind.

Im gezeigten Ausführungsbeispiel dienen zur Aufnahme des zu reinigenden Spülguts 5 Spülkörbe 6, wobei drei solcher Spülkörbe 6 vorgesehen sind.

Der Spülraum 4 mündet in einen im Detail nicht näher dargestellten Sammeltopf 7 des Spülbehälters 3 ein, an den eine Umwälzpumpe 8 strömungstechnisch angeschlossen ist. Über entsprechende und in der Figur nicht näher dargestellte Versorgungsleitungen ist die in den Figuren ebenfalls nicht dargestellte Sprüheinrichtung an die Umwälzpumpe 8 strömungstechnisch angeschlossen. Im bestimmungsgemäßen Verwendungsfall kann damit eine Beschickung der Sprüheinrichtung mit Spülflotte mittels der Umwälzpumpe 8 stattfinden.

Die Geschirrspülmaschine 1 verfügt desweiteren über eine Wärmepumpeneinrichtung 9. Diese weist einen Verdichter 10, einen Verflüssiger 11, ein Expansionsorgan in Form einer Drossel 12, einen Verdampfer 13 sowie einen diese Baukomponenten strömungstechnisch miteinander verbindenden Strömungskreislauf 14 auf, in dem ein Arbeitsmedium geführt ist.

Der Verdampfer 13 ist innerhalb eines Tanks 16 angeordnet, der mit einem Wärmeträgermedium 34 befüllt ist. Bei dem Wärmeträgermedium 34 handelt es sich vorzugsweise um Wasser.

Im bestimmungsgemäßen Verwendungsfall der Wärmepumpeneinrichtung 9 findet mithilfe des Verflüssigers 11 ein Wärmeübertrag von dem im Strömungskreislauf 14 der Wärmepumpeneinrichtung 9 geführten Arbeitsmedium auf die Spülflotte statt. Zu diesem Zweck ist ein an die Umwälzpumpe 8 angeschlossener Umwälzkreislauf 15 vorgesehen, der der Spülflottenumwälzung dient. Die im Betriebsfall im Verflüssiger 11 durch Verflüssigung des Arbeitsmediums frei werdende Wärmeenergie wird mithin auf die im Umwälzkreislauf 15 umgewälzte Spülflotte übertragen.

Die Wärmepumpeneinrichtung 9 weist somit mit dem Verdampfer 13 einen ersten Wärmetauscher auf, mit dem Wärmeenergie vom Wärmeträgermedium 34 auf das im Strömungskreislauf 14 der Wärmepumpeneinrichtung zirkulierende Arbeitsmedium übertragen wird, und mit dem Verflüssiger 11 einen zweiten Wärmetauscher, mit dem Wärmeenergie vom Arbeitsmedium auf die im Umwälzkreislauf 15 umgewälzte Spülflotte übertragen wird.

Die Wärmepumpeneinrichtung 9 verfügt desweiteren über einen weiteren Wärmetauscher 17, der bevorzugter Weise als Koaxial-Wärmetauscher ausgebildet ist.

Der weitere Wärmetauscher 17 verfügt über einen ersten Eingangsanschluss 22 für ein erstes Tauschermedium und über einen zweiten Eingangsanschluss 23 für ein zweites Tauschermedium. Dabei ist der erste Eingangsanschluss 22 mittels eines ersten Strömungskreislaufes 18 unter Zwischenschaltung einer Wasserweiche 20 an die Umwälzpumpe 8 und damit an den Spülbehälter 2 angeschlossen. Der zweite Eingangsanschluss 23 ist indes mittels eines zweiten Strömungskreislaufes 19 strömungstechnisch an den Tank 16 angeschlossen. In den zweiten Strömungskreislauf 19 ist eine Wärmeträgermediumpumpe 21 integriert, die der Umwälzung des zweiten Tauschermediums dient. Eine Umwälzung des ersten Tauschermediums wird mittels der Umwälzpumpe 8 besorgt.

Als erstes Tauschermedium dient Spülflotte. Diese wird im Betriebsfall mittels der Umwälzpumpe 8 dem Spülraum entnommen und im ersten Strömungskreislauf 18 umgewälzt und dabei durch den Wärmetauscher 17 geführt.

Das im Tank 16 befindliche Wärmeträgermedium dient als zweites Tauschermedium, das im Betriebsfall mittels der Wärmeträgermediumpumpe 21 im zweiten Strömungskreislauf 19 umgewälzt und dabei ebenfalls durch den Wärmetauscher 17 geführt wird.

Innerhalb des Wärmetauschers 17 kann ein Wärmeübertrag vom ersten Tauschermedium, das heißt von der Spülflotte auf das zweite Tauschermedium, mithin auf das Wärmeträgermedium stattfinden.

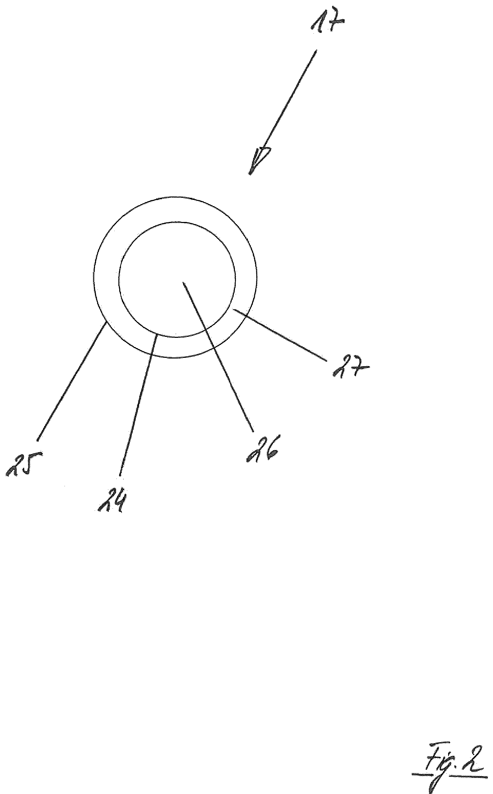

Der Wärmetauscher 17 ist bevorzugter Weise als Koaxial-Wärmetauscher ausgebildet, wie er in Figur 2 beispielhaft schematisch dargestellt ist. Wie sich aus dieser Darstellung ergibt, verfügt der Wärmetauscher 17 über ein Innenrohr 24 und ein das Innenrohr 24 aufnehmende Außenrohr 25. Dabei stellt das Innenrohr 24 einen ersten Strömungskanal 26 bereit. Ein zweiter Strömungskanal 27 wird durch den Ringspalt gebildet, der sich zwischen Innenrohr 24 einerseits und Außenrohr 25 andererseits befindet. Bei Ausschalten der Wärmeträgermediumpumpe 21 entleert sich der zweite Strömungskanal 27 automatisch und vorzugsweise vollständig, d.h. das Wärmeträgermedium fließt schwerkraftbedingt aus dem Wärmetauscher 17 heraus, so dass der zweite Strömungskanal 27 anschließend leer, also luftgefüllt ist.

Zwecks Spülflottenbeständigkeit sind die Rohre 24 und 25 des Wärmetauschers 17 bevorzugter Weise entweder aus Kunststoff oder aus Edelstahl gebildet. Dabei kann gemäß einer bevorzugten Ausführungsalternative das Innenrohr 24 ein Edelstahlrohr sein, wohingegen das Außenrohr ein Kunststoffrohr ist. Die Wandstärken der Rohre betragen vorzugsweise zwischen 0,1 und 2mm, bevorzugter Weise zwischen 0,3 und 1mm. Der Durchmesser des Innenrohres 24 beträgt vorzugsweise zwischen 3mm und 12mm, wobei aus Gründen eines Schutzes vor Verstopfung durch verschmutzte Spülflotte besonders bevorzugt der Durchmesser zwischen 5mm und 9mm beträgt.

In einer besonders bevorzugten Ausführung ist am spülflottenseitigen Eingang des entsprechenden Rohres 24 beziehungsweise 25 eine Verengung und/oder eine Blende mit geringfügig kleinerem Durchmesser als der Durchmesser des Rohres angeordnet, so dass etwaige Verschmutzungen, die diese Verengung beziehungsweise Blende passieren können auf jeden Fall auch das zugehörige Rohr durchströmen können, ohne dass die Gefahr einer ungewollten Verstopfung besteht.

Für einen effizienten Wärmetausch ist der als zweiter Strömungskanal 27 fungierende, zwischen Innenrohr 24 und Außenrohr 25 ausgebildete Ringspalt 1mm bis 10mm weit, das heißt der Abstand zwischen der Außenoberfläche des Innenrohrs 24 und der Innenfläche des Außenrohrs 25 beträgt 1mm bis 10mm, bevorzugter Weise 3mm bis 8mm.

Insgesamt sind die Dimensionen so zu wählen, dass der über das jeweilige Volumen entstehende Druckverlust nicht über 400mbar, besonders bevorzugt nicht über 300mbar liegt. Die Volumenströme durch die jeweiligen Volumina sollen mindestens 2 Liter pro Minute, insbesondere 2 - 12 Liter pro Minute, in bevorzugter Weise mindestens 4 Liter pro Minute, insbesondere 4 - 10 Liter pro Minute, und in besonders bevorzugter Weise 4 -8 Liter pro Minute betragen. Dies stellt den bestmöglichen Kompromiss zwischen Pumpenleistung und Wärmetauscherleistung dar. Die angegeben Volumenströme gelten dabei insbesondere für beide Strömungskanäle 26, 27.

Alternativ zu dem vorbeschriebenen Aufbau eines Koaxial-Wärmetauschers können auch andere Wärmetauscherausführungen verwendet werden, so zum Beispiel Plattenwärmetauscher. Sofern Wärmetauscher mit engen Spalten auch für das verschmutzte Spülwasser, das heißt die Spülflotte verwendet werden, ist durch geeignete Mittel sicher zu stellen, dass die entsprechenden Kanäle vor Verschmutzungen geschützt sind. Dies kann beispielsweise durch eine entsprechende Anbindung des Einlasses des Wärmetauschers an ein Filtersystem geschehen, vorzugsweise an das in der Geschirrspülmaschine ohnehin vorhandene Filtersystem. Bevorzugter Weise liegt die Fläche eines alternativ eingesetzten Plattenwärmetauschers in einem Bereich von 0,15 m² bis 0,5 m², besonders bevorzugt in einem Bereich von 0,2 m² bis 0,3m².

Wie insbesondere die Darstellung nach Figur 1a erkennen lässt, ist es bevorzugt, dass der Auslauf des Wärmetauschers 17 in Höhenrichtung oberhalb des im Betrieb des Geschirrspülers sich im Spülbehälter 3 einstellenden Flüssigkeitsspiegels angeordnet ist. Besonders vorgezogen ist es, den Wärmetauscher 17 seitlich des Spülbehälters 3 anzuordnen, und zwar so, dass eine vollständige Entleerung bei Nichtbenutzung ermöglicht ist. Im Falle eines Koaxial-Wärmetauschers ist dieser deshalb bevorzugter Weise in Höhenrichtung der Geschirrspülmaschine 1, das heißt vertikal ausgerichtet.

Die Länge des Wärmetauschers 17 beträgt vorzugsweise 1,0 - 4,0m, idealerweise 1,5 - 2,5m.

Die Wärmepumpeneinrichtung 9 dient in an sich bekannter Weise dazu, die Aufheizung der Spülflotte zu bewirken, zumindest teilweise. Infolge dessen kommt es zu einer Abkühlung des Wärmeträgermediums 34, bis hin zum Einfrieren desselben, so dass sich Eis im Tank 16 bildet. Für eine erneute Verwendung der Wärmepumpeneinrichtung 9 sollte das Wärmeträgermedium möglichst wieder aufgetaut sein und vorzugsweise eine Mindesttemperatur beispielsweise 12°C, idealerweise Raumtemperatur erreicht haben. Um das Auftauen beziehungsweise das Erreichen der Mindesttemperatur des Wärmeträgermediums zu beschleunigen, dient der erfindungsgemäß vorgesehene Wärmetauscher 17, der es ermöglicht, die nach Abschluss eines Spülschritts noch warme Spülflotte dazu zu nutzen, einen Wärmeübertrag aus der Spülflotte auf das Wärmeträgermedium zu bewirken.

Zu diesem Zweck ist ein erster Strömungskreislauf 18 vorgesehen, der an das Spülflottensystem strömungstechnisch angeschlossen ist sowie ein zweiter Strömungskreislauf 19, der strömungstechnisch an den Tank 16 der Wärmepumpeneinrichtung 9 angebunden ist. Dabei wird mittels einer Wärmeträgermediumpumpe 21 das im Tank befindliche und nicht gefrorene Wärmeträgermedium so durch den Wärmetauscher 17 gepumpt, dass es anschließend wieder zurück in den Tank 16 läuft, und zwar vorzugsweise so, dass es dabei möglichst großflächig über im Tank 16 befindliches Eis strömen kann, dieses somit erwärmt und gleichmäßig auftaut.

Der erste Strömungskreislauf 18 wird aus dem Spülflottensystem so gespeist, dass erwärmte Spülflotte mittels einer Pumpe durch den Wärmetauscher 17 und von dort wieder in das Spülflottensystem gelangt. Dabei sind Ansaug- und Einlassort möglichst so vorzusehen, dass das im Spülflottensystem befindliche warme Wasser möglichst gut durchmischt wird. In der in Figur 1a gezeigten Ausführungsform dient als Pumpe für den ersten Strömungskreislauf 18 die in der Geschirrspülmaschine 1 ohnehin vorgesehene Umwälzpumpe 8.

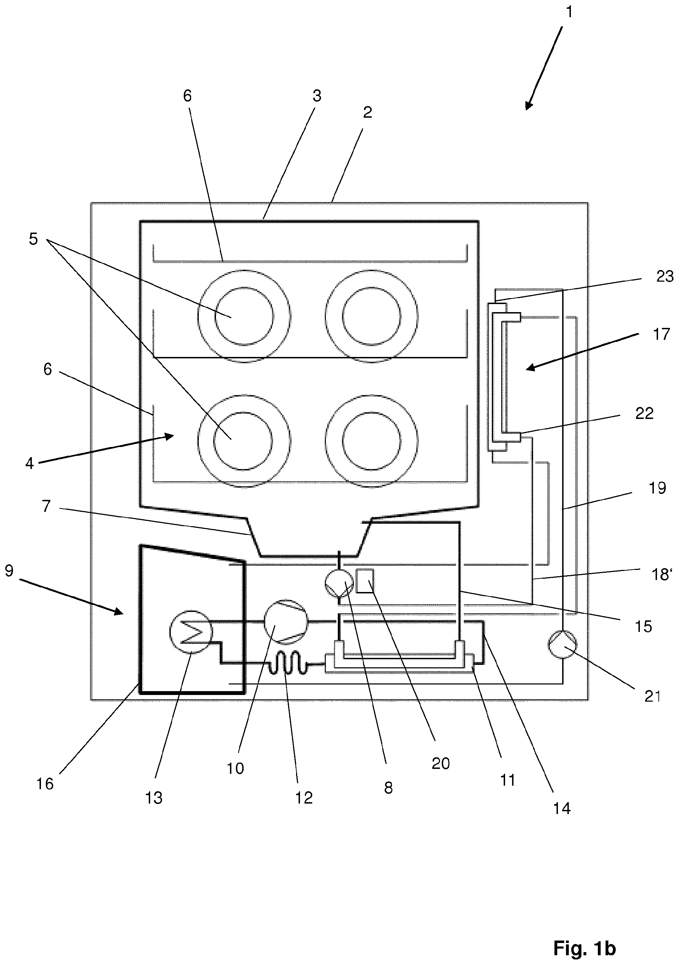

Figur 1b lässt in rein schematischer Darstellung ein gegenüber der Fig. 1a geringfügig abgewandeltes Ausführungsbeispiel für eine Geschirrspülmaschine 1 nach der Erfindung erkennen. Dieses unterscheidet sich dadurch, dass in einem ersten Strömungskreislauf 18' Wärmetauscher 17 und Verdichter 11 in Reihe angeordnet sind, wobei Spülflotte erst durch den Wärmetauscher 17 und anschließend durch den Verdichter 11 geführt wird. Der in Fig. 1a separat ausgebildete Umwälzkreislauf 15, welcher dazu dient im Verdichter 11 Wärmeenergie vom Arbeitsmedium auf die im Umwälzkreislauf 15 umgewälzte Spülflotte zu übertragen und somit die Spülflotte aufzuheizen, ist also im Ausführungsbeispiel der Fig. 1b in den ersten Strömungskreislauf 18' integriert. Der erst Strömungskreislauf 18' wird dabei vorzugsweise stets, d.h. in jeder Stellung der Wasserweiche 20 von der Umwälzpumpe 8 mit Spülflotte versorgt, oder aber zumindest dann, wenn das Arbeitsmedium innerhalb des Strömungskreislauf 14 der Wärmepumpeneinrichtung 9 zirkuliert.

Mit der erfindungsgemäßen Konstruktion ergibt sich die folgende Verfahrensweise:
Beim Spülschritt des Reinigens und/oder Klarspülens wird die Wärmepumpeneinrichtung 9 eingeschaltet und entzieht mit dem Verdampfer 13 dem im Tank als Wärmeträgermedium befindlichen Wasser thermische Energie. Dabei kann das Wasser teilweise einfrieren. Im Verflüssiger wird die Energie durch einen dafür vorgesehenen Wärmeübertrager an die Spülflotte übertragen.

Nach Ablauf des Reinigungs- und/oder Zwischenspül- und/oder Klarspülschritts wird nicht gefrorenes Wasser aus dem Tank 16 sowie die erwärmte Spülflotte durch den Wärmetauscher 17 im Gegenstrom gepumpt, so dass die in der Spülflotte enthaltene Wärmeenergie in das als Wärmeträgermedium dienende Wasser übergehen kann. Das so aufgewärmte Wärmeträgermedium wird anschließend zurück in den Tank 16 gelassen, so dass gefrorenes Wärmeträgermedium wieder auftauen kann, was im Ergebnis eine schnellere Regeneration des Wärmeträgermediums mit sich bringt. Nach der Beendigung des Wärmetausches wird die dann abgekühlte Spülflotte verworfen, das heißt abgepumpt.

Der Ablauf der Wärmetauscherfunktion kann entweder rein zeitgesteuert oder besonders bevorzugt temperaturgesteuert werden, wobei mittels eines Temperatursensors entweder das Temperaturniveau der Spülflotte und/oder Änderungen des Temperaturniveaus ausgewertet werden. Bevorzugter Weise wird der Wärmetausch dann beendet, wenn entweder das Temperaturniveau der Spülflotte gering genug ist und/oder sich das Temperaturniveau innerhalb einer definierten Zeitspanne nicht weiter ändert.

Aus Gründen der Energieeffizienz sehen viele Standard-Spülprogramme vor, dass die Temperatur der Spülflotte beim Reinigen und/oder Klarspülen unterhalb von 50°C liegt. Dies kann dazu führen, dass infolge einer bestimmungsgemäßen Reinigung gelöste und sich in der Spülflotte befindlichen Fette und/oder Öle emulgieren und infolge einer späteren Abkühlung der Spülflotte zur Agglomeration und Ablagerung insbesondere an Kunststoffteilen neigen. Dies kann in unerwünschter Weise auch zu einem Zusetzen des Wärmetauschers 17 oder anderer während des Wärmetauschs mit der Spülflotte beaufschlagten Teile wie z.B. der Siebkombination im Sammeltopf 7 führen.

Um diesem Problem zu begegnen, wird eine Verfahrensabwicklung zum Wärmetausch vorgeschlagen, die die in der Spülflotte vorhandene Energie nicht bis auf ein theoretisch zu erreichendes Niveau tauscht, sondern den Tauschprozess bei Erreichen einer vorgebbaren Grenztemperatur beendet. Diese Grenztemperatur kann in unterschiedlichen Programmphasen aufgrund unterschiedlicher Belastungen mit Fetten und/oder Ölen unterschiedlich hoch sein. So liegt die Grenztemperatur zumindest im Spülprogrammschritt des Reinigens höher, als beim Klarspülen. In Zwischenspülschritten zwischen der Reinigungs- und Klarspülphase sollte die Grenztemperatur ebenfalls höher als beim Klarspülen sein, da das Ausspülen von Fetten und/oder Ölen aus der Geschirrspülmaschine 1 unterstützt werden soll.

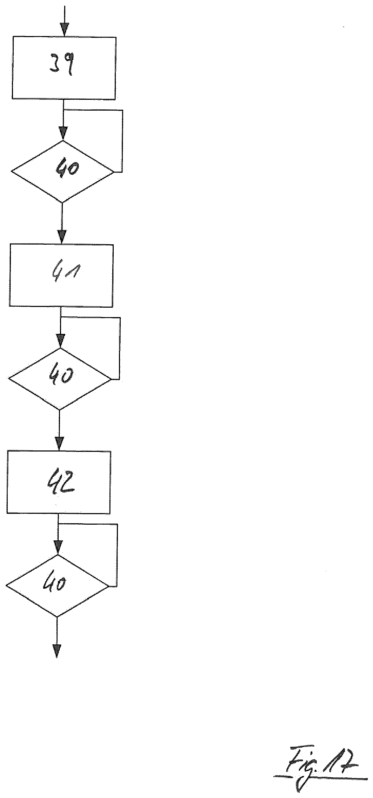

Figur 17 lässt ein Ablaufschema hinsichtlich Wärmetauscherablauf und Grenztemperatur erkennen. Nach Beendigung einer Reinigung 39 findet eine Wärmerückgewinnung 40 nur solange statt, als dass die Temperatur der Spülflotte oberhalb einer vorgegebenen Grenztemperatur, von zum Beispiel 35°C, liegt. Es erfolgt sodann ein Zwischenspülen 41. Dem Zwischenspülen 41 folgt eine weitere Wärmerückgewinnung 40 nach, wobei auch in diesem Fall eine vorgegebene Grenztemperatur der Spülflotte, beispielsweise von 35°C, nicht unterschritten wird. Als letzter Spülschritt folgt ein Klarspülen 42. Diesem Klarspülen folgt eine dritte Wärmerückgewinnung 40 nach, wobei in diesem Fall die vorgegebene Grenztemperatur von zum Beispiel 35°C unterschritten werden kann.

Mit der erfindungsgemäßen Konstruktion wird es im Ergebnis ermöglicht, dem im Tank bevorrateten Wärmeträgermedium zwecks Aufheizung der Spülflotte Wärmeenergie zu entziehen, und zwar sogar soweit, dass das Wärmeträgermedium einfriert. Die nach Beendigung eines Spülschritts noch warme Spülflotte wird alsdann dazu genutzt, Wärmeenergie in das Wärmeträgermedium zurückzuführen, so dass eine zumindest teilweise Regeneration aus der Wärmeenergie der Spülflotte stattfinden kann.

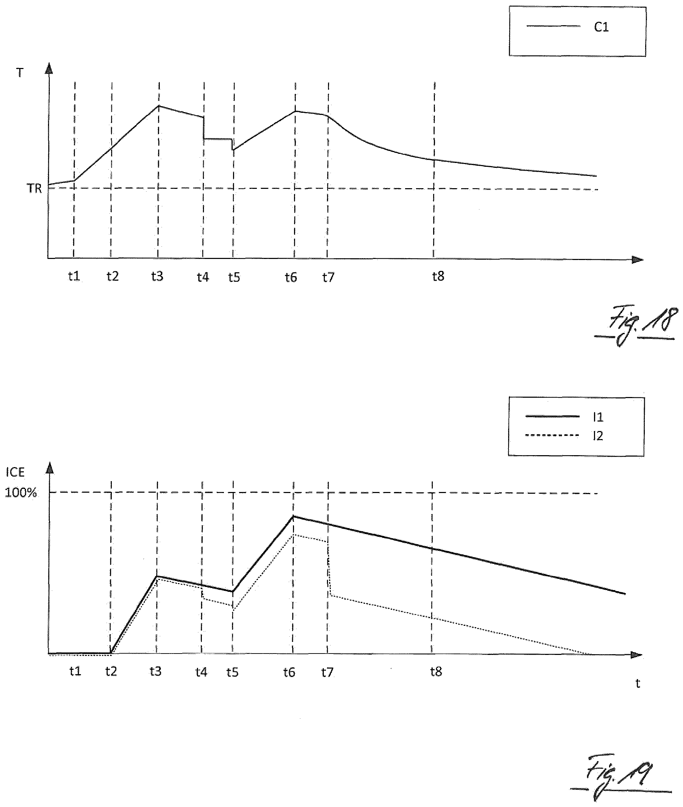

Figur 18 lässt schematisch einen idealisierten Temperaturverlauf eines Spülprogramms erkennen. Dabei ist die Temperatur der Spülflotte über die Zeit abgetragen.

Zum Zeitpunkt t₁ wird die Wärmepumpeneinrichtung 9 zugeschaltet. Nach Erreichen der gewünschten Temperatur im Reinigungsschritt zum Zeitpunkt t₃ wird die Heizung abgeschaltet und für eine gewisse Zeitspanne wird mit der aufgeheizten Spülflotte gereinigt, wobei sich die Spülflotte abkühlt. Zum Zeitpunkt t₄ findet ein Wasserwechsel zum Zwischenspülen statt, hiernach schließt sich zum Zeitpunkt t₅ ein erneuter Wasserwechsel an, bevor das Klarspülen folgt. Zwischen den Zeitpunkten t₅ und t₆ wird die Spülflotte während des Klarspülens aufgeheizt und bis t₇ genutzt. Anschließend wird die Spülflotte verworfen und bis zum Zeitpunkt te erfolgt der Trocknungsschritt, womit das Spülprogramm beendet ist. Wie sich aus dem Diagramm ergibt, ist auch nach dem Programmende die Geschirrspülmaschine 1 noch warm, denn die Abkühlung der Geschirrspülmaschine 1 ist nicht programmgesteuert und dauert längere Zeit.

Figur 19 lässt eine idealisierte Vereisung des Tanks 17 ohne Wärmerückgewinnung gemäß durchgezogener Linie und mit erfindungsgemäß vorgeschlagener Wärmerückgewinnung gemäß gepunkteter Linie erkennen. Es ist ersichtlich, dass die Vereisung des Tanks 16 nicht schon zum Zeitpunkt t₁, sondern erst nach der Umwandlung der sensiblen Wärme zum Zeitpunkt t₂ beginnt. Schon mit dem Abschalten der Wärmepumpeneinrichtung 9 findet eine geringe, passive Regeneration des Tanks 17 aufgrund von zum Beispiel Wärmestrahlung statt. Zu den Zeitpunkten t₄ und t₅ erfolgen die Wärmerückgewinnung und das anschließende Verwerfen der Spülflotte. Wie sich anhand der gestrichelten Kurve ergibt, ist die Regenerationszeit des Tanks 16 zum ersten Tauschprozess t₄ größer, als beim zweiten Tauschprozess t₅. Da beim Zwischenspülen nicht geheizt wird, findet bis zum erneuten Einschalten der Wärmepumpeneinrichtung t₅ eine erneute geringe, passive Regeneration des Tanks 16 statt. Bis zum Zeitpunkt t₆ wird das Eisvolumen erneut aufgebaut, sofern es zu einer Nutzung der Wärmepumpeneinrichtung 9 kommt, bevor es aufgrund des Wärmetauscherschritts zum Zeitpunkt t₇ deutlich reduziert wird. Wie das Diagramm gemäß Figur 19 weiter zeigt, ist der Tank 16 aufgrund der Wärmerückgewinnung deutlich früher aufgetaut, als ohne Wärmerückgewinnung.

Bei einer Rückführung des Wärmeträgermediums 34 aus dem Wärmetauscher 17 zurück in den Tank 16 erfolgt ein Tankeinlauf bevorzugter Weise derart, dass eine möglichst großflächige Verteilung innerhalb des Tanks 16 stattfinden kann. Zu diesem Zweck ist eine Verteileinrichtung 29 vorgesehen, die es ermöglicht, dass zurückströmendes Wärmeträgermedium großflächig über im Tank 16 befindliches Eis strömen kann. Dies stellt ein gleichmäßiges Auftauen sicher.

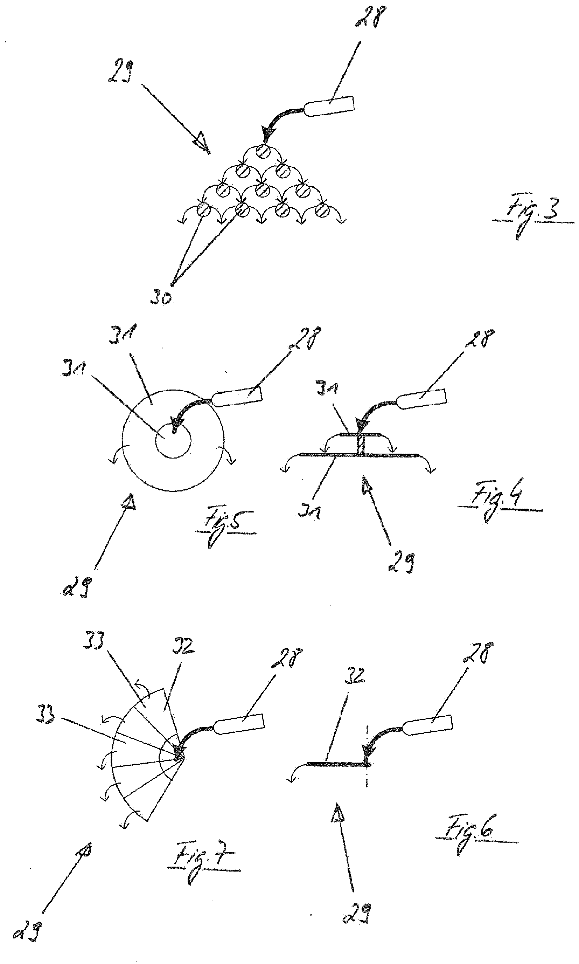

Die Figuren 3 bis 7 lassen drei Beispiele einer solchen Verteileinrichtung 29 erkennen.

Gemäß einer ersten Ausführungsform, wie sie in Fig. 3 dargestellt ist, verfügt die Verteileinrichtung 29 über mehrere Stäbe 30, die auf Lücke zueinander angeordnet sind. Aus dem Tankeinlauf 28 ausströmendes Wärmemedium wird infolgedessen in Entsprechung der in Fig. 3 eingezeichneten Pfeile verteilt.

Eine alternative Ausgestaltung zeigen die Figuren 4 und 5. Gemäß dieser Ausführungsform verfügt die Verteileinrichtung über in Höhenrichtung beabstandet zueinander angeordnete Teller 31. Diese sind hinsichtlich ihrer Tellerfläche unterschiedlich groß ausgebildet, wobei der zuoberst angeordnete Teller 31 im Tellerdurchmesser am kleinsten ausgebildet ist. Es ergibt sich im Betriebsfall eine Verteilung, wie sie in den Figuren 4 und 5 mittels der eingezeichneten Pfeile dargestellt ist.

Eine weitere Ausführungsform lassen die Figuren 6 und 7 erkennen. Gemäß dieser Ausführungsvariante verfügt die Verteileinrichtung 29 über eine Art Fächerblech 32, das zueinander abgewinkelte Abschnitte 33 aufweist. Diese Abschnitte 33 sorgen für eine Verteilung eines auf die Verteileinrichtung 29 aufgegebenen Wärmeträgermediums, wie dies anhand der in den Figuren 6 und 7 eingezeichneten Pfeile zu erkennen ist.

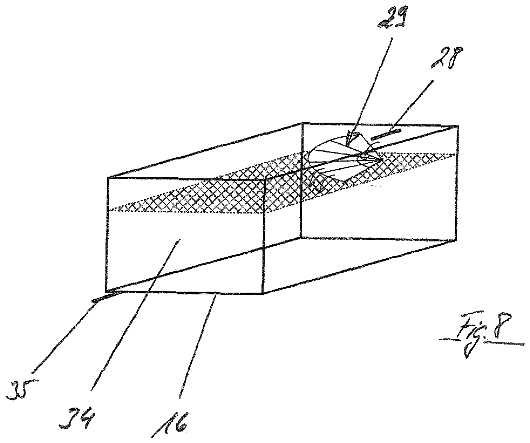

Fig. 8 lässt eine Verteileinrichtung 29 gemäß den Figuren 6 und 7 erkennen. Wie sich aus dieser Darstellung ergibt, ist die Verteileinrichtung 29 oberhalb eines Flüssigkeitsspiegels eines im Tank 16 bevorrateten Wärmeträgermediums angeordnet. Dabei kann mittels der Verteileinrichtung 29 eine möglichst großflächige Verteilung des über den Tankeinlauf 28 in den Tank 17 einströmenden Wärmeträgermediums erreicht werden.

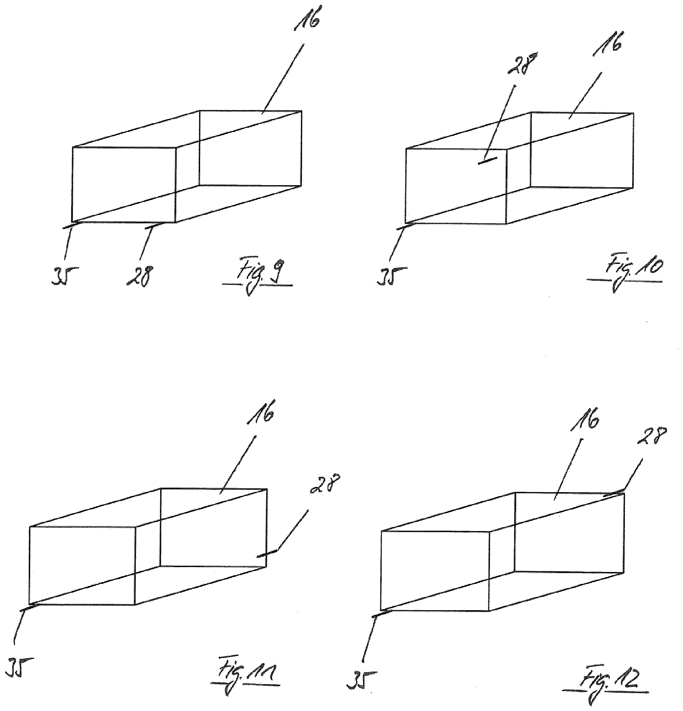

Es ist ferner bevorzugt, dass der Tankeinlauf 28 sowie der Tankauslass 35 räumlich möglichst weit voneinander separiert sind, so dass eine möglichst gute Durchmischung innerhalb des Tanks 16 stattfinden kann. Die Figuren 9 und 12 lassen jeweils unterschiedliche Positionen hinsichtlich des Tankeinlaufs 28 erkennen.

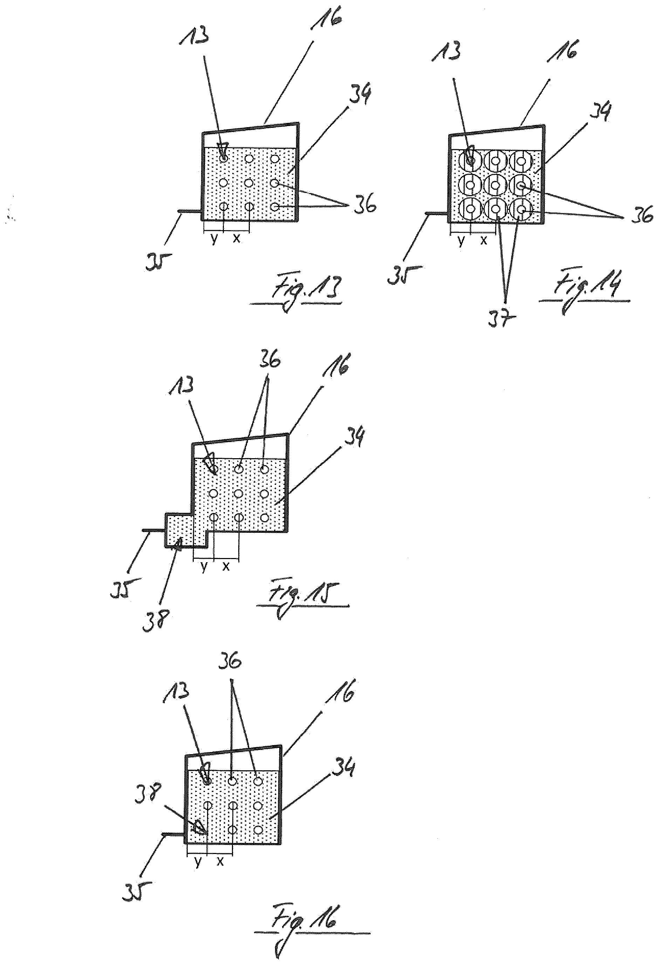

Fig. 13 lässt einen Tank 16 in schematischer Darstellung erkennen, der mit einem Wärmeträgermedium 34 befüllt ist. Innerhalb des Tanks 16 ist der Verdampfer 13 angeordnet, der im gezeigten Ausführungsbeispiel über mehrere Verdampferrohre 36 verfügt. Im bestimmungsgemäßen Betriebsfall der Wärmepumpeneinrichtung 9 gefriert das Wärmeträgermedium, wobei sich um die einzelnen Verdampferrohre 36 Eismäntel 37 bilden, wie in Fig. 14 gezeigt. In einer bevorzugten Ausgestaltung sind der Tank 16 und der darin angeordnete Verdampfer 13 so ausgebildet, das das Abstandsmaß y größer oder gleich dem Abstandsmaß x ist, wobei das Maß x den Abstand zwischen zwei Verdampferrohren 36 bezeichnet und das Maß y den Abstand zwischen einem äußeren Verdampferrohr 36 und einer Innenwand des Tanks 16. Vorzugsweise ist das Abstandsmaß y mindestens doppelt so groß wie das Abstandsmaß x.

Um sicherzustellen, dass für den zweiten Strömungskreislauf 27 genügend flüssiges Wärmeträgermedium bereitsteht, wird mit der Erfindung vorgeschlagen, einen Ansaugbereich 38 vorzusehen, der frei von Baukomponenten des Verdampfers 13 ist. Die Figuren 15 und 16 zeigen jeweils die Ausbildung eines solchen Ansaugbereichs 38.

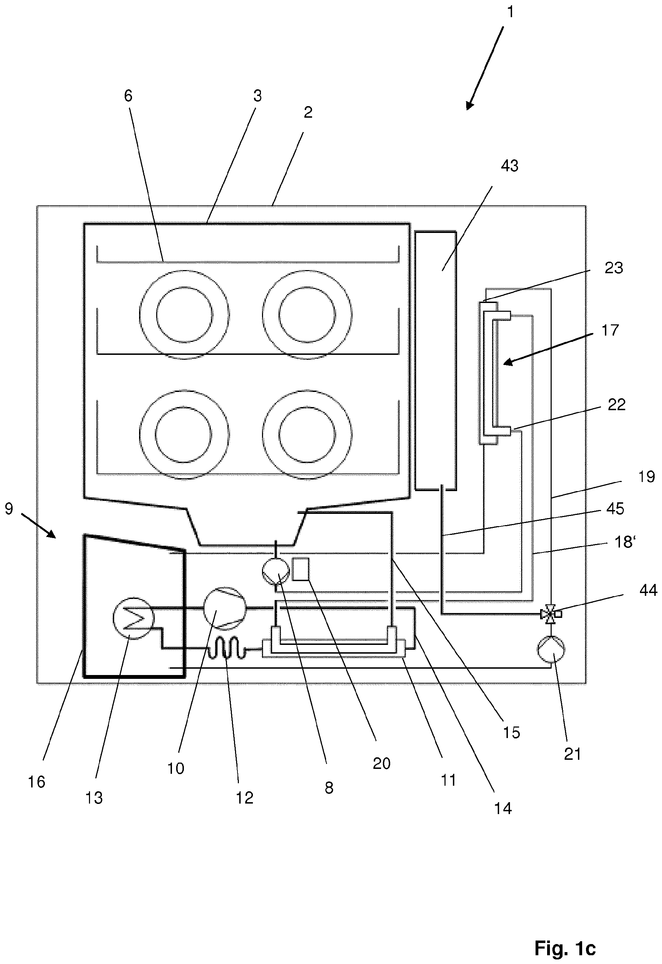

Figur 1c lässt in rein schematischer Darstellung ein gegenüber der Fig. 1b geringfügig abgewandeltes Ausführungsbeispiel für eine Geschirrspülmaschine 1 nach der Erfindung erkennen. Dieses unterscheidet sich dadurch, dass zusätzlich zu dem Wärmetauscher 17 ein Zwischenspeicher 43 zur Bevorratung von Wärmeträgermedium vorhanden ist. Der Zwischenspeicher 43 ist dem Behandlungsbehälter 3 nebengeordnet, vorzugsweise benachbart zu einer in Beschickungsrichtung der Reinigungsmaschine 1 seitlichen Behandlungsbehälterwand. Der Zwischenspeicher 43 steht in strömungstechnischer Verbindung mit dem Tank 16, so dass Wärmeträgermedium aus dem Tank 16 in den Zwischenspeicher 43 überführt werden kann und umgekehrt. Der Zwischenspeicher 43 ist außenseitig am Reinigungsbehälter 3 angeordnet. Um einen möglichst guten Wärmeübertrag vom Reinigungsbehälter 3, dessen Beladung und/oder aus der Reinigungsflotte auf das im Zwischenspeicher 43 befindliche Wärmeträgermedium zu ermöglichen, sind der Reinigungsbehälter 3 und der Zwischenspeicher 43 thermisch miteinander gekoppelt.

Der Zwischenspeicher 43 kann insbesondere durch einen Frischwassertank, eine Wassereinlauftasche oder dgl. Behältnis bereitgestellt sein.

Vorzugsweise ist eine Ventileinrichtung 44 vorhanden, die derart schaltbar ist, dass das Wärmeträgermedium aus dem Tank 16 mittels der Wärmeträgermediumpumpe 21 wahlweise entweder zum Wärmetauscher 17 oder zum Zwischenspeicher 43 gefördert werden kann.

Das Verfahren gemäß Fig. 1c ist vorzugsweise folgendermaßen ausgestaltet:

Nach einem Reinigungsprogrammschritt, in dem die Reinigungsflotte aufgewärmt wurde, wird die warme Reinigungsflotte einerseits als erstes Tauschermedium entlang des ersten Strömungskreislaufs 18' sowie das Wärmeträgermedium andererseits als zweites Tauschermedium entlang des zweiten Strömungskreislaufs 19 durch den Wärmetauscher 17 geführt werden, vorzugsweise wiederholt durch den Wärmetauscher 17 geführt werden. Dies erfolgt bei einem Spülprogramm beispielsweise nach einem Programmschritt REINIGEN und/oder nach einem Programmschritt KLARSPÜLEN. Dabei ist insbesondere eine Ventileinrichtung 44 so geschaltet, dass das Wärmeträgermedium aus dem Tank 16 mittels der Wärmeträgermediumpumpe 21 zum Wärmetauscher 17 gefördert wird. Nach dem letzten wasserführenden Programmschritt wird die Ventileinrichtung 44 dann umgeschaltet, nämlich so geschaltet, dass das Wärmeträgermedium aus dem Tank 16 mittels der Wärmeträgermediumpumpe 21 zum Zwischenspeicher 43 gefördert wird. Im Zwischenspeicher 43 wird das Wärmeträgermedium während des Programmschritts TROCKNEN und/oder nach einem Reinigungsprogramm bzw. außerhalb eines Reinigungsprogramms bevorratet, wobei es Wärme aus dem Reinigungsbehälter 3 und der Umgebung aufnimmt. Die Bevorratungsdauer ist dabei vorgegeben oder vorgebbar oder wird abhängig von erfassten Messwerten, insbesondere der Temperatur des Wärmeträgermediums im Tank 16 und/oder im Zwischenspeicher 43, automatisch festgelegt. Während der Bevorratungsdauer wird im Zwischenspeicher 43 befindliches Wärmeträgermedium vorzugsweise mehrfach in den Tank 16 abgelassen, was vorzugsweise schwerkraftbedingt erfolgt, und anschließend Wärmeträgermedium aus dem Tank 16 mittels der Wärmeträgermediumpumpe 21 zurück in den Zwischenspeicher 43 gefördert.

### Bezugszeichen

- 1: Geschirrspülmaschine
- 2: Gehäuse
- 3: Spülbehälter
- 4: Spülraum
- 5: Spülgut
- 6: Spülgutkorb
- 7: Sammeltopf
- 8: Umwälzpumpe
- 9: Wärmepumpeneinrichtung
- 10: Verdichter
- 11: Verflüssiger
- 12: Drossel
- 13: Verdampfer
- 14: Strömungskreislauf der Wärmepumpe
- 15: Umwälzkreislauf
- 16: Tank
- 17: Wärmetauscher
- 18,: 18' erster Strömungskreislauf
- 19: zweiter Strömungskreislauf
- 20: Wasserweiche
- 21: Wärmeträgermediumpumpe
- 22: Eingangsanschluss erstes Tauschermedium
- 23: Eingangsanschluss zweites Tauschermedium
- 24: Innenrohr
- 25: Außenrohr
- 26: erster Strömungskanal
- 27: zweiter Strömungskanal
- 28: Tankeinlauf
- 29: Verteileinrichtung
- 30: Stab
- 31: Teller
- 32: Fächerblech
- 33: Abschnitt
- 34: Wärmeträgermedium
- 35: Tankauslass
- 36: Verdampferrohr
- 37: Eismantel
- 38: Ansaugbereich
- 39: Reinigungsschritt
- 40: Wärmeübertragung
- 41: Zwischenspülschritt
- 42: Klarspülschritt
- 43: Zwischenspeicher
- 44: Ventileinrichtung
- 45: Anschlussleitung

## Patentansprüche

1. Reinigungsmaschine, insbesondere Haushaltsgeschirrspülmaschine, mit einem einen Behandlungsraum (4) bereitstellenden Behandlungsbehälter (3), der der Aufnahme von zu reinigendem Behandlungsgut (5) dient, und einer Wärmepumpeneinrichtung (9), die als ersten Wärmetauscher einen Verdampfer (13) aufweist, der innerhalb eines mit einem Wärmeträgermedium (34) befüllten Tanks (16) angeordnet ist, und mit dem Wärmeenergie vom Wärmeträgermedium (34) auf ein in einem Strömungskreislauf der Wärmepumpeneinrichtung (9) zirkulierendes Arbeitsmedium übertragen werden kann, und die als zweiten Wärmetauscher einen Verflüssiger (11) aufweist, mit dem Wärmeenergie vom Arbeitsmedium auf die Behandlungsflotte übertragen werden kann,
wobei die Wärmepumpeneinrichtung (9) einen weiteren Wärmetauscher (17) aufweist, der eingangsseitig eines von der Behandlungsflotte gebildeten ersten Tauschermediums an den Behandlungsbehälter (3) strömungstechnisch angeschlossen ist,
**dadurch gekennzeichnet, dass**
der weitere Wärmetauscher (17) eingangsseitig sowie ausgangsseitig eines vom Wärmeträgermedium (34) gebildeten zweiten Tauschermediums an den Tank (16) strömungstechnisch angeschlossen ist, derart dass die Tauschermedien in dem weiteren Wärmetauscher (17) aneinander vorbeigeführt werden können.

2. Reinigungsmaschine nach Anspruch 1,
**dadurch gekennzeichnet, dass** der weitere Wärmetauscher (17) ein Koaxial-Wärmetauscher ist.

3. Reinigungsmaschine nach Anspruch 2,
**dadurch gekennzeichnet, dass**
der Koaxial-Wärmetauscher ein einen ersten Strömungskanal (26) bereitstellendes Innenrohr (24) und ein das Innenrohr (24) unter Belassung eines als zweiten Strömungskanal (27) dienenden Ringspalts aufnehmendes Außenrohr (25) aufweist, wobei das Innenrohr (24) an den Behandlungsbehälter (3) strömungstechnisch angeschlossen ist.

4. Reinigungsmaschine nach Anspruch 2 oder 3,
**dadurch gekennzeichnet, dass**
die Eingangsanschlüsse (22, 23) des Koaxial-Wärmetauschers zur Zuführung der Tauschermedien strömungstechnisch einander gegenüberliegend ausgebildet sind.

5. Reinigungsmaschine nach einem der vorhergehenden Ansprüche,
**gekennzeichnet durch**
eine im Behandlungsbehälter (3) angeordnete Sprüheinrichtung zur Beaufschlagung von zu reinigendem Behandlungsgut (5) mit Behandlungsflotte und durch eine der Umwälzung der Behandlungsflotte dienende Umwälzpumpe (8), wobei der weitere Wärmetauscher (17) eingangsseitig des ersten Tauschermediums an die Umwälzpumpe (8) angeschlossen ist.

6. Reinigungsmaschine nach einem der vorhergehenden Ansprüche,
**dadurch gekennzeichnet, dass**
der weitere Wärmetauscher (17) ausgangsseitig des ersten Tauschermediums an den Behandlungsbehälter (3) strömungstechnisch angeschlossen ist.

7. Reinigungsmaschine nach einem der vorhergehenden Ansprüche,
**dadurch gekennzeichnet, dass**
der Tank (16) eine Verteileinrichtung (29) für aus dem weiteren Wärmetauscher (17) in den Tank (16) einströmendes Wärmeträgermedium aufweist.

8. Reinigungsmaschine nach einem der vorhergehenden Ansprüche,
**dadurch gekennzeichnet, dass**
der tankseitige Tankeinlauf (28) und der tankseitige Tankauslass (35) für das Wärmeträgermedium zwecks strömungstechnischer Entkopplung räumlich weitestgehend voneinander separiert ausgebildet sind.

9. Reinigungsmaschine nach einem der vorhergehenden Ansprüche,
**dadurch gekennzeichnet, dass**
der tankseitige Tankauslass (35) in einen Ansaugbereich (38) mündet, der frei von Baukomponenten des Verdampfers (13) ausgebildet ist.

10. Verfahren zum Betrieb einer Reinigungsmaschine nach einem der vorhergehenden Ansprüche, bei dem nach Beendigung eines mit erwärmter Behandlungsflotte durchgeführten Behandlungsschritts eines Behandlungsprogramms die Behandlungsflotte als Wärmequelle verwendet und als erstes Tauschermedium durch den weiteren Wärmetauscher (17) geführt wird und bei dem das infolge eines vorangegangenen Betriebs der Wärmepumpeneinrichtung (9) abgekühlte Wärmeträgermedium als zweites Tauschermedium durch den weiteren Wärmetauscher (17) geführt wird.

11. Verfahren nach Anspruch 10,
**dadurch gekennzeichnet, dass**
die Tauschermedien im Gegenstrom durch den weiteren Wärmetauscher (17) geführt werden.

12. Verfahren nach Anspruch 10 oder 11,
**dadurch gekennzeichnet, dass**
die Tauschermedien jeweils in einem Strömungskreislauf (18, 19) wiederholt durch den weiteren Wärmetauscher (17) geführt werden.

13. Verfahren nach Anspruch 10, 11 oder 12
**dadurch gekennzeichnet, dass**
die Temperatur der Behandlungsflotte erfasst wird.

14. Verfahren nach einem der vorhergehenden Ansprüche 10 bis 13,
**dadurch gekennzeichnet, dass**
eine Beschickung des weiteren Wärmetauschers (17) mit Behandlungsflotte als erstes Tauschermedium in Abhängigkeit der Temperatur der Behandlungsflotte beendet wird.

## Claims

1. Cleaning machine, in particular a domestic dishwasher, comprising a treatment container (3) that provides a treatment chamber (4) and serves to accommodate the items to be treated (5) to be cleaned, and a heat pump device (9), which has an evaporator (13) as the first heat exchanger, which is arranged within a tank (16) filled with a heat transfer medium (34), and by means of which thermal energy can be transferred from the heat transfer medium (34) to a working medium circulating in a flow circuit of the heat pump device (9), and which has a condenser (11) as the second heat exchanger, by means of which thermal energy can be transferred from the working medium to the treatment solution,
wherein the heat pump device (9) has a further heat exchanger (17) which is fluidically connected to the treatment container (3) on the inlet side of a first exchanger medium formed by the treatment solution,
**characterised in that**
the additional heat exchanger (17) is fluidically connected to the tank (16) on the inlet side and on the outlet side of a second exchanger medium formed by the heat transfer medium (34) such that the exchanger media in the further heat exchanger (17) can be conducted past one another.

2. Cleaning machine according to claim 1,
**characterised in that**
the further heat exchanger (17) is a coaxial heat exchanger.

3. Cleaning machine according to claim 2,
**characterised in that**
the coaxial heat exchanger comprises an inner pipe (24), which provides a first flow channel (26), and an outer pipe (25), which receives the inner pipe (24) while leaving an annular gap serving as a second flow channel (27), the inner tube (24) being fluidically connected to the treatment container (3).

4. Cleaning machine according to either claim 2 or claim 3,
**characterised in that**
the inlet connections (22, 23) of the coaxial heat exchanger for supplying the exchanger media are designed to be fluidically opposite one another.

5. Cleaning machine according to any of the preceding claims,
**characterised by**
a spray device arranged in the treatment container (3) for applying treatment solution to the items to be treated (5) to be cleaned, and by a circulating pump (8) serving to circulate the treatment solution, the further heat exchanger (17) being connected to the circulating pump (8) on the inlet side of the first exchanger medium.

6. Cleaning machine according to any of the preceding claims,
**characterised in that**
the further heat exchanger (17) is fluidically connected to the treatment container (3) on the output side of the first exchanger medium.

7. Cleaning machine according to any of the preceding claims,
**characterised in that**
the tank (16) has a distribution device (29) for heat transfer medium flowing from the further heat exchanger (17) into the tank (16).

8. Cleaning machine according to any of the preceding claims,
**characterised in that**
the tank-side tank inlet (28) and the tank-side tank outlet (35) for the heat transfer medium are spatially separated from one another as far as possible for the purpose of fluidic decoupling.

9. Cleaning machine according to any of the preceding claims,
**characterised in that**
the tank-side tank outlet (35) opens into an intake region (38) which is free of structural components of the evaporator (13).

10. Method for operating a cleaning machine according to any of the preceding claims, in which method, after a treatment step of a treatment program carried out using heated treatment solution has ended, the treatment solution is used as a heat source and is conducted through the further heat exchanger (17) as the first exchanger medium and in which method the heat transfer medium cooled as a result of a previous operation of the heat pump device (9) is conducted through the further heat exchanger (17) as the second exchanger medium.

11. Method according to claim 10,
**characterised in that**
the exchanger media are conducted in counterflow through the further heat exchanger (17).

12. Method according to either claim 10 or claim 11,
**characterised in that**
the exchanger media are each repeatedly conducted through the further heat exchanger (17) in a flow circuit (18, 19).

13. Method according to claim 10, claim 11 or claim 12,
**characterised in that**
the temperature of the treatment solution is detected.

14. Method according to any of claims 10 to 13,
**characterised in that**
loading of the further heat exchanger (17) with treatment solution as the first exchanger medium is terminated on the basis of the temperature of the treatment solution.

## Revendications

1. Machine de nettoyage, en particulier lave-vaisselle domestique, comportant un récipient de traitement (3) fournissant une chambre de traitement (4) et servant à recevoir des articles à traiter (5) à nettoyer, et un dispositif de pompe à chaleur (9) qui présente un évaporateur (13), en tant que premier échangeur de chaleur, disposé à l'intérieur d'un réservoir (16) rempli d'un milieu caloporteur (34) et au moyen duquel de l'énergie thermique peut être transférée du milieu caloporteur (34) à un milieu de travail circulant dans un circuit d'écoulement du dispositif de pompe à chaleur (9), et qui présente un condenseur (11) en tant que second échangeur de chaleur, au moyen duquel de l'énergie thermique peut être transférée du milieu de travail au bain de traitement,
dans laquelle le dispositif de pompe à chaleur (9) présente un autre échangeur de chaleur (17)
qui est relié par liaison par écoulement au récipient de traitement (3) côté entrée d'un premier milieu d'échange formé par le bain de traitement,
**caractérisée en ce que**
l'échangeur de chaleur supplémentaire (17) est relié par liaison par écoulement au réservoir (16) côté entrée et côté sortie d'un second milieu d'échange formé par le milieu caloporteur (34), de telle sorte que les milieux d'échange peuvent être passés l'un à côté de l'autre dans l'autre échangeur de chaleur (17).

2. Machine de nettoyage selon la revendication 1,
**caractérisée en ce que**
l'autre échangeur de chaleur (17) est un échangeur de chaleur coaxial.

3. Machine de nettoyage selon la revendication 2,
**caractérisée en ce que**
l'échangeur de chaleur coaxial présente un tube intérieur (24) fournissant un premier canal d'écoulement (26) et un tube extérieur (25) recevant le tube intérieur (24) tout en laissant un espace annulaire servant de second canal d'écoulement (27), le tube intérieur (24) étant relié par liaison par écoulement au récipient de traitement (3).

4. Machine de nettoyage selon la revendication 2 ou 3,
**caractérisée en ce que**
les bornes d'entrée (22, 23) de l'échangeur de chaleur coaxial sont conçues opposées l'une à l'autre par liaison par écoulement pour l'alimentation du milieu d'échange.

5. Machine de nettoyage selon l'une des revendications précédentes,
**caractérisée par**
un dispositif de pulvérisation disposé dans le récipient de traitement (3) permettant d'appliquer le bain de traitement sur les articles à traiter (5) à nettoyer et par une pompe de circulation (8) servant à faire circuler le bain de traitement, l'autre échangeur de chaleur (17) étant relié à la pompe de circulation (8) côté entrée du premier milieu d'échange.

6. Machine de nettoyage selon l'une des revendications précédentes,
**caractérisée en ce que**
l'autre échangeur de chaleur (17) est relié par liaison par écoulement au récipient de traitement (3) côté sortie du premier milieu d'échange.

7. Machine de nettoyage selon l'une des revendications précédentes,
**caractérisée en ce que**
le réservoir (16) présente un dispositif de distribution (29) pour un milieu caloporteur s'écoulant dans le réservoir (16) à partir de l'autre échangeur de chaleur (17).

8. Machine de nettoyage selon l'une des revendications précédentes,
**caractérisée en ce que**
l'entrée de réservoir côté réservoir (28) et la sortie de réservoir côté réservoir (35) pour le milieu caloporteur sont conçues séparées l'une de l'autre aussi loin que possible spatialement en vue d'un découplage par liaison par écoulement.

9. Machine de nettoyage selon l'une des revendications précédentes,
**caractérisée en ce que**
la sortie de réservoir côté réservoir (35) débouche dans une zone d'admission (38) qui est conçue sans composants de l'évaporateur (13).

10. Procédé de fonctionnement d'une machine de nettoyage selon l'une des revendications précédentes, dans lequel, après la fin d'une étape de traitement d'un programme de traitement effectuée avec un bain de traitement chauffé, le bain de traitement est utilisé comme source de chaleur et est passé à travers l'autre échangeur de chaleur (17) en tant que premier milieu d'échange, et le milieu caloporteur refroidi résultant d'un fonctionnement précédent du dispositif de pompe à chaleur (9) étant guidé en tant que second milieu d'échange à travers l'autre échangeur de chaleur (17).

11. Procédé selon la revendication 10,
**caractérisé en ce que**
les milieux d'échange sont guidés à contre-courant à travers l'autre échangeur de chaleur (17).

12. Procédé selon la revendication 10 ou 11,
**caractérisé en ce que**
les milieux d'échange sont respectivement guidés à plusieurs reprises à travers l'autre échangeur de chaleur (17) dans un circuit d'écoulement (18, 19).

13. Procédé selon la revendication 10, 11 ou 12
**caractérisé en ce que**
la température du bain de traitement est enregistrée.

14. Procédé selon l'une des revendications précédentes 10 à 13,
**caractérisé en ce que**
un chargement de l'autre échangeur de chaleur (17) avec le bain de traitement en tant que premier milieu d'échange est terminé en fonction de la température du bain de traitement.
